# EUROPÄISCHE PATENTSCHRIFT

(11) **EP 0 958 642 B1**
(45) Veröffentlichungstag und Bekanntmachung des Hinweises auf die Patenterteilung: **28.11.2001**
(21) Anmeldenummer: 98912228.8
(22) Anmeldetag: 06.02.1998
(51) Int. Cl.: H02H 1/06

(54) **SCHALTUNGSANORDNUNG FÜR DEN BETRIEB EINES ELEKTRONISCHEN AUSLÖSERS EINES LEISTUNGSSCHALTERS**
CIRCUITRY FOR OPERATING AN ELECTRONIC TRIPPING DEVICE IN A CIRCUIT BREAKER
CIRCUITERIE POUR LE FONCTIONNEMENT D'UN DECLENCHEUR ELECTRONIQUE D'UN SECTIONNEUR DE PUISSANCE

(30) Priorität: 06.02.1997 DE 19706040
(43) Veröffentlichungstag der Anmeldung: 24.11.1999
(73) Patentinhaber: SIEMENS AKTIENGESELLSCHAFT, 80333 München (DE)
(72) Erfinder: BAUMGÄRTL, Ulrich, D-13599 Berlin (DE); RÖHL, Wolfgang, D-13503 Berlin (DE); FRANKE, Henry, D-12619 Berlin (DE)
(86) Internationale Anmeldenummer: DE9800432
(87) Internationale Veröffentlichungsnummer: WO9835418

(56) Entgegenhaltungen:
- EP-A- 0 625 814
- US-A- 5 220 495

## Beschreibung

Die Erfindung betrifft eine Schaltungsanordnung zur Bereitstellung einer Hilfsenergie und eines Meßsignales zum Betrieb eines eine Mikroprozessoreinrichtung aufweisenden elektronischen Auslösers für einen mehrpoligen Leistungsschalter, der je Pol einen Stromwandler mit einer sowohl das Meßsignal als auch die Hilfsenergie bereitstellenden Sekundärwicklung aufweist.

Eine Schaltungsanordnung dieser Art ist beispielsweise durch die US 4 914 541 A1 bekannt geworden. Diese und ähnlich aufgebaute Schaltungsanordnungen haben die Eigenschaft, daß die aus den Stromwandlern gewonnene Hilfsspannung mit dem Meßsignal galvanisch gekoppelt ist und daher die Verarbeitung des analogen Meßsignales erhebliche schaltungstechnische Probleme bereitet. Diese Probleme schlagen sich in einem erhöhten Aufwand an Bauelementen und/oder in einem unbefriedigenden Verhalten der Schaltungsanordnung nieder.

Der Erfindung liegt die Aufgabe zugrunde, die Gewinnung des Meßsignales und die Versorgung der Mikroprozessorschaltung mit einer Hilfsenergie einfacher und weniger störanfällig zu gestalten.

Diese Aufgabe wird dadurch gelöst, daß
- die Sekundärwicklung jedes Poles durch je einen Meßwiderstand mit einem Bezugspotential verbunden ist,
- das Bezugspotential sowie die an den Meßwiderständen abfallenden Spannungen an gesonderte Eingänge der Mikroprozessoreinrichtung angelegt sind,
- die verbleibenden Anschlüsse der Sekundärwicklungen über je zwei antiparallel geschaltete Dioden parallel geschaltet und zwischen die hierdurch gebildeten Verbindungspunkte und das Bezugspotential je eine Ladekapazität geschaltet und
- die genannten Verbindungspunkte ferner zur Bereitstellung der Hilfsenergie mit der Mikroprozessoreinrichtung verbunden sind.

Die Schaltungsanordnung nah der Erfindung stellt eine positive und eine negative Spannung zum Betrieb der Mikroprozessorschaltung zur Verfügung. Dabei ist es wesentlich, daß die bisher übliche Pegelwandlung und/oder Gleichrichtung der Meßsignale entfällt. Vielmehr werden die an den Meßwiderständen anliegenden Signale direkt an die entsprechenden Eingänge der mit einem Analog/Digitalwandler (A/D-Wandler) versehene Mikroprozessoreinrichtung angelegt.

Um eine Störung der Wirkungsweise der neuen Schaltungsanordnung durch das evtl. Auftreten eines Gleichgliedes in den Stromwandlern zu vermeiden, empfiehlt es sich eine Ergänzung der Schaltungsanordnung nach der Erfindung derart, daß parallel zu jeder Ladekapazitäten unter Zwischenschaltung einer Diode eine in Abhängigkeit von der an der Ladekapazität auftretenden Spannung steuerbare Schalteinrichtung geschaltet ist. Diese Schalteinrichtungen sorgen für eine gleiche Belastung der positiven und negativen Spannungen, die an die Mikroprozessoreinrichtung angelegt sind.

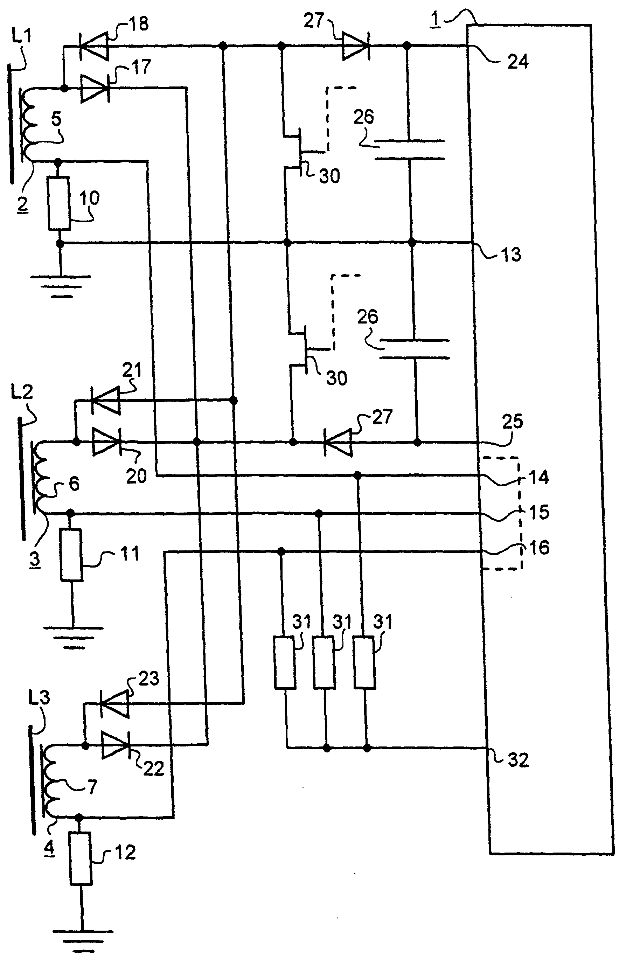

Die Erfindung wird im folgenden anhand des in der Figur dargestellten Ausführungsbeispieles näher erläutert.

Das in der Figur gezeigte Schaltbild stellt einen Teil eines elektronischen Auslösers eines mehrpoligen Niederspannungs-Leistungsschalters dar. Meßsignale für Phasenströme und eine Hilfsenergie zum Betrieb einer Mikroprozessoreinrichtung 1 werden durch Stromwandler 2, 3 und 4 bereitgestellt, die den Phasenleitern L1, L2 und L3 zugeordnet sind und die jeweils eine Sekundärwicklung 5, 6 bzw. 7 aufweisen.

Die Sekundärwicklungen 5, 6 und 7 sind jeweils mit ihrem einen Wicklungsende über einen Meßwiderstand 10, 11 bzw. 12 mit einem als Erde dargestellten Bezugspotential verbunden. Dieses Bezugspotential ist auch an einen Eingang 13 der Mikroprozessoreinrichtung 1 angelegt. Ferner sind die betreffenden Anschlußpunkte der Sekundärwicklungen 5, 6 und 7 mit weiteren Eingängen 14, 15 bzw. 16 verbunden, die zu einer der Mikroprozessoreinrichtung 1 zugeordneten oder in ihr enthaltenen A/D-Wandler gehören.

Mit den weiteren Anschlußpunkten der Sekundärwicklungen 5, 6 und 7 sind jeweils zwei antiparallel bzw. gegensinnig geschaltete Dioden 17 und 18, 20 und 21 bzw. 22 und 23 verbunden. Somit steht an jeder dieser Dioden eine positive bzw. negative Spannung zur Verfügung. Es sind jeweils alle positiven und negativen Spannungen miteinander verbunden; d. h. die Dioden 18, 21 und 23 haben gemeinsame Verbindungpunkte ebenso wie die Dioden 17, 20 und 22. Die an diesen Verbindungspunkten gebildeten Spannungen werden entsprechenden Eingängen 24 bzw. 25 der Mikroprozessoreinrichtung 1 zur Versorgung mit Hilfsenergie zugeführt. Ferner sind zwischen den Eingang 24 und den Eingang 13 für das Bezugspotential sowie zwischen das Potential und den Eingang 25 Ladekapazitäten 26 geschaltet.

Auf die Genauigkeit der Strommessung und damit auf die Wirksamkeit des Überstromauslösers wirkt es sich aus, ob die Stromwandler 2, 3 und 4 in beiden Halbwellen des Wechselstromes gleichmäßig belastet sind oder ob ein Gleichglied auftritt. Um ein solches Gleichglied zu vermeiden, ist jeweils unter Zwischenschaltung einer Diode 27 parallel zu jeder der Ladekapazitäten 26 eine steuerbare Schalteinrichtung 30 geschaltet, die als Feldeffekt-Leistungstransistor dargestellt ist. Obwohl Einzelheiten der Ansteuerung dieser Schalteinrichtungen 30 nicht dargestellt sind, ist diese Schaltung so zu verstehen, daß insbesondere durch eine von der Mikroprozessoreinrichtung 1 veranlaßte Steuerung eine veränderliche zusätzliche Belastung herbeigeführt wird, deren Ergebnis eine gleichmäßige Belastung der Stromwandler 2, 3 und 4 in der negativen und positiven Halbwelle ist.

Eine Erkennung von Erdschlüssen ist bei der beschriebenen Schaltungsanordnung auf besonders einfache Weise durch Summierung der Spannungen an den Meßwiderständen 10, 11 und 12 möglich. Hierzu ist eine Sternschaltung von Widerständen 31 vorgesehen, deren Sternpunkt mit einem gesonderten Eingang 32 der Mikroprozessoreinrichtung verbunden ist.

## Patentansprüche

1. Schaltungsanordnung zur Bereitstellung einer Hilfsenergie und eines Meßsignales zum Betrieb eines eine Mikroprozessoreinrichtung (1) aufweisenden elektronischen Auslösers für einen mehrpoligen Leistungschalter, der je Pol einen Stromwandler (2, 3, 4) mit einer sowohl das Meßsignal als auch die Hilfsenergie bereitstellenden Sekundärwicklung (5, 6, 7) aufweist,
**dadurch gekennzeichnet , daß**
- die Sekundärwicklung (5, 6, 7) jedes Poles (21, 22, 23) durch je einen Meßwiderstand (10, 11, 12) mit einem Bezugspotential verbunden ist,
- das Bezugspotential sowie die an den Meßwiderständen (10, 11, 12) abfallenden Spannungen an gesonderte Eingänge (13, 24, 25) der Mikroprozessoreinrichtung (1) angelegt sind,
- die verbleibenden Anschlüsse der Sekundärwicklungen (5, 6, 7) über je zwei antiparallel geschaltete Dioden (17, 18; 20, 21; 22, 23) parallelgeschaltet und zwischen die hierdurch gebildeten Verbindungspunkte und das Bezugspotential je eine Ladekapazität (26) geschaltet und
- die genannten Verbindungspunkte ferner zur Bereitstellung der Hilfsenergie mit der Mikroprozessoreinrichtung (1) verbunden sind.

2. Schaltungsanordnung nach Anspruch 1,
**dadurch gekennzeichnet , daß**
parallel zu jeder der Ladekapazitäten (26) unter Zwischenschaltung einer Diode (27) eine in Abhängigkeit von der an der Ladekapazität (26) auftretenden Spannung steuerbare Schalteinrichtung (30) geschaltet ist.

## Claims

1. Circuit arrangement for the provision of auxiliary power and of a measurement signal for operating an electronic tripping device, comprising a microprocessor device (1), for a multipole circuit breaker which comprises a current transformer (2, 3, 4) per pole with a secondary winding (5, 6, 7) providing both the measurement signal and the auxiliary power, **characterized in that**
- the secondary winding (5, 6, 7) of each pole (21, 22, 23) is in each case connected to a reference potential through a measuring resistor (10, 11, 12),
- the reference potential and the voltages dropping at the measuring resistors (10, 11, 12) are applied to separate inputs (13, 24, 25) of the microprocessor device (1),
- the remaining connections of the secondary windings (5, 6, 7) are in each case connected in parallel via two diodes (17, 18; 20, 21; 22, 23) connected in inverse parallel and a charging capacitor (26) is in each case connected between the connection points formed thereby and the reference potential and
- the said connection points are additionally connected to the microprocessor device (1) for the purpose of providing the auxiliary power.

2. Circuit arrangement according to Claim 1, **characterized in that** a switching device (30), which can be controlled in dependence on the voltage occurring at the charging capacitor (26), is connected in parallel to each of the charging capacitors (26) with an interposed diode (27).

## Revendications

1. Montage pour la mise à disposition d'une énergie auxiliaire et d'un système de mesure pour le fonctionnement d'un déclencheur électronique, comportant un dispositif (1) microprocesseur, pour un disjoncteur multipolaire qui comporte à chaque pôle un transformateur (2, 3, 4) de courant ayant un enroulement (5, 6, 7) secondaire mettant à disposition à la fois le signal de mesure et l'énergie auxiliaire,
**caractérisé en ce que**
- l'enroulement (5, 6, 7) secondaire de chaque pôle (21, 22, 23) est relié à un potentiel de référence par respectivement une résistance (10, 11, 12) de mesure,
- le potentiel de référence ainsi que les tensions qui s'abaissent sur les résistances (10, 11, 12) de mesure sont appliqués à des entrées (13, 24, 25) distinctes du dispositif (1) microprocesseur,
- les bornes restantes des enroulements (5, 6, 7) secondaires sont montées en parallèle par l'intermédiaire de respectivement deux diodes (17, 18 ; 20, 21 ; 22, 23) montées tête-bêche et il est branché respectivement une capacité (26) de charge entre les points de liaison ainsi formés et le potentiel de référence et
- lesdits points de liaison sont reliés de plus au dispositif (1) microprocesseur pour la mise à disposition de l'énergie auxiliaire.

2. Montage suivant la revendication 1, **caractérisé en ce qu'**il est monté en parallèle à chacune des capacités (26) de charge, avec interposition d'une diode (27), un dispositif (30) de commutation, qui peut être commandé en fonction de la tension apparaissant sur la capacité (26) de charge.
